# EUROPÄISCHE PATENTSCHRIFT

(11) **EP 0 758 936 B1**
(45) Veröffentlichungstag und Bekanntmachung des Hinweises auf die Patenterteilung: **23.01.2002**
(21) Anmeldenummer: 96905867.6
(22) Anmeldetag: 06.03.1996
(51) Int. Cl.: B23D 47/04, B23Q 16/00

(54) **POSITIONIERSYSTEM FÜR RUNDHOLZKAPPANLAGEN**
POSITIONING SYSTEM FOR ROUND WOOD TOPPING INSTALLATIONS
SYSTEME DE POSITIONNEMENT POUR INSTALLATIONS A EBOUTER DU BOIS ROND

(30) Priorität: 09.03.1995 DE 19508401
(43) Veröffentlichungstag der Anmeldung: 26.02.1997
(73) Patentinhaber: Hanses & Co. KG, 59872 Meschede (DE)
(72) Erfinder: Hanses, Josef, 59872 Meschede-Remblinghausen (DE)
(74) Vertreter: Bauer, Robert, Dipl.-Ing.
(86) Internationale Anmeldenummer: EP9600955
(87) Internationale Veröffentlichungsnummer: WO9628272

(56) Entgegenhaltungen:
- FR-A- 1 430 227
- FR-A- 1 556 389
- US-A- 3 522 750
- US-A- 3 718 061
- HOLZ-ZENTRALBLATT, Bd. 110, Nr. 10, 23.Januar 1984, STUTTGART, Seite 151 XP002006277 in der Anmeldung erwähnt

## Beschreibung

Die Erfindung betrifft ein Positioniersystem für Rundholzkappanlagen gemäß Gattungsbegriff des Anspruchs 1.

Bei bekannten und gebräuchlichen Rundholzkappanlagen sind eine Reihe Anschläge in die Bahn des zugeführten Rundholzes einschwenkbar auf einem motorisch hin- und herverfahrbaren Wagen angeordnet, auf dem das Rundholz hinter der Säge zur Auflage kommt. Von diesen Anschlägen wird jeweils der dem Kappmaß am ehesten entsprechende eingeschwenkt, während zur Einstellung von Zwischenmaßen der Wagen verfahren wird. Wegen der verhältnismäßig großen Massenträgheit des Wagens kann dies nur langsam geschehen. Zudem aber besteht die Gefahr, daß das eintreffende Holz beim Auftreffen auf den feststehenden Anschlag zurückprallt, weshalb die Zuführung des Holzes mit geringer Geschwindigkeit erfolgen muß. Auf diese Weise ist die Positionierung entsprechend dem gewünschten Kappmaß ein zeitraubender Vorgang.

Aus der Zeitschrift "Holz-Zentralblatt", Nr. 10, 1984, Seite 151, ist des weiteren eine rechnergesteuerte Rundholzkappanlage mit den Merkmalen des Gattungsbegriffs bekannt, bei der das Rundholz hinter dem Sägeblatt auf einem Gurtförderer Aufnahme findet und eine Reihe einschwenkbarer Anschläge auf einem gemeinsamen Rahmen angeordnet sind, der unter Rechnersteuerung mittels eines eigenen Antriebs verfahrbar ist. Indessen ist hier das Funktionsprinzip insoweit eine ähnliches, als für die Kapplängenfeineinstellung alle Anschläge gemeinsam und mitsamt dem Rahmen verfahren und sodann jeweils ohne Rücksicht auf die augenblickliche Lage des Holzes stillgesetzt werden. Ein Rückprall wird in diesem Fall durch eine entsprechend eingestellte Nachlaufstrecke des Gurtförderers ausgeglichen.

Von daher liegt der Erfindung die Aufgabe zugrunde, ein Positioniersystem für Rundholzkappanlagen zu schaffen, welches auf zuverlässige Weise eine wesentlich raschere Positionierung gestattet.

Diese Aufgabe ist erfindungsgemäß durch ein Positioniersystem mit den Merkmalen des Anspruchs 1 gelöst. Die Unteransprüche geben darüber hinausgehend vorteilhafte Ausgestaltungsmöglichkeiten an.

Der dabei zur Anwendung kommende, für sich verfahrbare Anschlag kann wegen seiner geringen Masse rasch und dabei von vornherein genau in die gewünschte Position in bezug auf das Sägeblatt verfahren werden. Dazu noch kann das Holz verhältnismäßig rasch zugeführt werden, da es seitens des mitbewegten Anschlags sanft aufgefangen wird und somit nicht zum Zurückprallen neigt. Eine präzise Steuerung der Bewegung des Anschlags ermöglicht es, den Sägevorgang bereits einzuleiten, noch bevor das an dem Anschlag anliegende Holz zur Ruhe gekommen ist, wodurch sich eine zusätzliche Zeitersparnis ergibt. Eine weitere Zeitersparnis läßt sich dadurch erzielen, daß mindestens zwei abwechselnd zum Einsatz kommende Anschläge vorgesehen sein können, von denen einer jeweils in Bereitschaft steht, das nächste Rundholz anzunehmen, noch ehe der vorausgehend zum Einsatz gekommene Anschlag in seine Ausgangsposition zurückgefahren ist.

Nachfolgend wird ein entsprechendes Ausführungsbeispiel anhand der Figuren genauer beschrieben. Dabei zeigt
- Fig. 1: eine Draufsicht auf den wesentlichen Teil einer mit dem betreffenden Positioniersystem ausgerüsteten Rundholzkappanlage und
- Fig. 2: eine Stirnansicht durch das Positioniersystem aus einer Ebene entsprechend Linie II-II von Fig. 1 samt eingelegtem Rundholz.

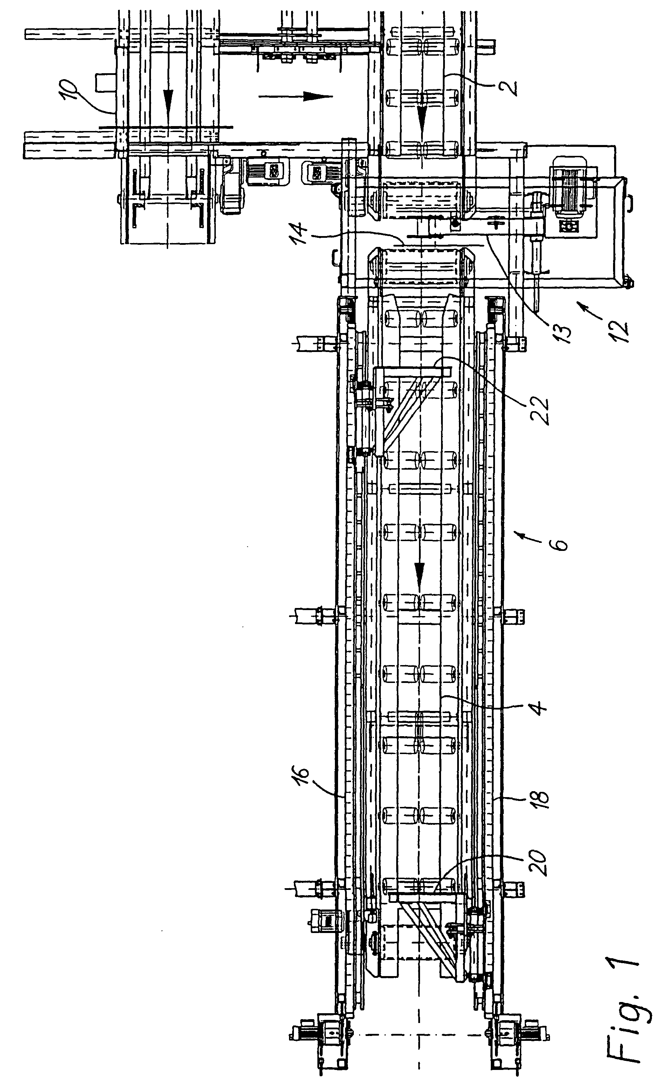

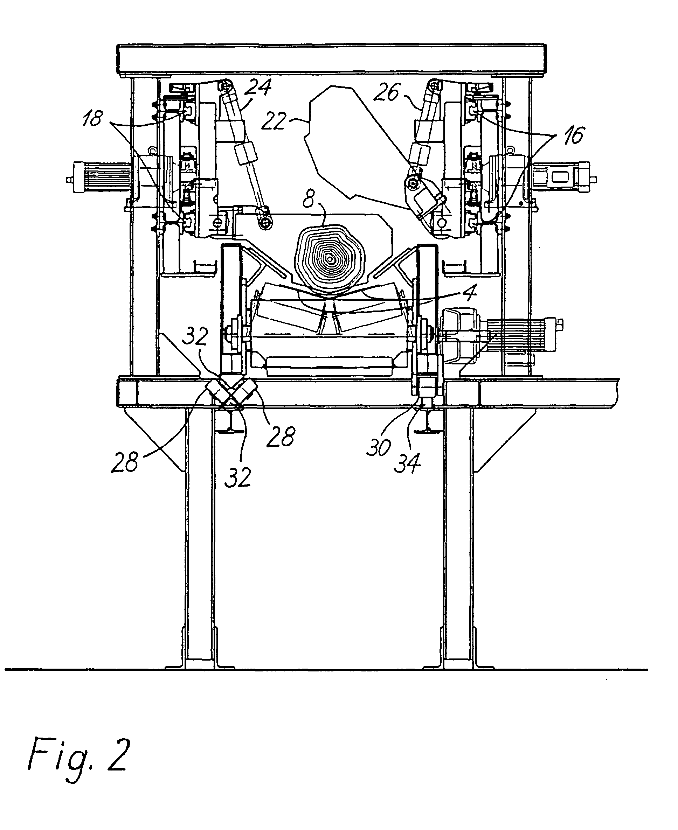

Die in Fig. 1 gezeigte Rundholzkappanlage weist ein aus zwei aufeinanderfolgenden horizontalen Gurtförderern 2 und 4 gebildetes Bett 6 für die Aufnahme des zu verarbeitenden Rundholzes 8 (siehe Fig. 2) auf, dem das Rundholz im Bereich des Gurtförderers 2 über einen Querförderer 10 zugeführt wird. Zwischen den beiden Gurtförderern 2 und 4 ist die Säge 12 in Gestalt einer Kreissäge mit einem mittels eines schwenkbaren Armes 13 transversal zu dem Bett 6 einfahrbaren Sägeblatt 14 angeordnet.

Beiderseits des Gurtförderers 4 sind auf dazu parallellaufenden Schienen 16 und 18 zwei jeweils in die Bahn des Rundholzes 8 auf dem Bett 6 einschwenkbare Anschläge 20 und 22 gelagert, die motorisch entlang den Schienen 16 und 18 hin- und herverfahrbar sind. Die beiden Anschläge 20 und 22 sind aneinander vorbeibeweglich, um abwechselnd die in Fig. 1 anhand des Anschlags 22 gezeigte Warteposition einnehmen zu können, während der jeweils andere Anschlag sich mit dem anliegenden Rundholz 8 in die vorgesehene Kapposition begibt.

Die Antriebe der Gurtförderer 2 und 4 und der Anschläge 20 und 22 sind als Servoantriebe, d.h. drehmoment- und geschwindigkeitssteuerbare Antriebe, in gegenseitiger Abhängigkeit derart steuerbar, daß der jeweils aktivierte und dazu in die Bahn des Rundholzes 8 eingeschwenkte Anschlag beim Eintreffen des Rundholzes an ihm dem Gurtförderer 4 geringfügig nacheilt und bei der Weiterführung des Rundholzes bis zur Annäherung an die Kappposition bestrebt bleibt, dem Gurtförderer 4 nachzueilen, so daß er von dem Rundholz geschoben wird, während er für den dann fälligen Bremsvorgang bis zur Stillsetzung in der dem Kappmaß entsprechenden Position die Regie übernimmt. Dabei erfolgt die Abbremsung schnellstmöglich, unter Einhaltung einer vorgegebenen Bremsrampenfunktion.

Infolge des vorgegebenen Ablaufs der Abbremsvorganges kann das Einfahren des Sägeblattes 14 bereits eingeleitet werden, noch ehe der Anschlag mit dem Holz 8 zur Ruhe gekommen ist. Auf diese Weise und da das Holz am jeweiligen Anschlag 20 oder 22 mit unverminderter Fördergeschwindigkeit eintreffen kann, wie auch das Anfahren des Kappmaßes kontinuierlich und in einer einzigen Richtung erfolgen kann, arbeitet das vorausgehend beschriebene Positioniersystem außerordentlich zeitsparend.

Wie aus Fig. 2 ersichtlich, geschieht das Einschwenken der beiden Anschläge 20 und 22 mittels Stellzylinder 24 bzw. 26. Sodann ist aus Fig. 2 noch zu ersehen, daß der Gurtförderer 4 mittels Rollen 28 bzw. 30 auf parallel zu den Schienen 16 und 18 verlaufenden Schienen 32 und 34 gelagert ist. Dies erlaubt es, durch Verfahren des Gurtförderers 4 unterhalb der Säge 12 gewünschtenfalls einen vergrößerten Freiraum zu schaffen, durch den Anschnitte wie vor allem vom Bereich des Wurzelansatzes eines Stammes nach unten abgeworfen werden können.

Die Abführung des geschnittenen Holzes kann in irgendeiner üblichen Weise, etwa durch Querförderer oder auch in Längsrichtung durch den Gurtförderer 4 erfolgen.

## Patentansprüche

1. Positioniersystem für Rundholzkappanlagen, welches das in dessen Längsrichtung zugeführte Rundholz (8) an einem in der gleichen Richtung hin- und herverfahrbaren Anschlag (20, 22) zur Anlage gelangen läßt und mit diesem daraufhin in vorgesehener Position in bezug auf ein transversal einfahrbares Sägeblatt (14) für den Sägevorgang stillsetzt, wobei das Rundholz (8) hinter dem Sägeblatt (14) auf einem Gurtförderer (4) Aufnahme findet, an dem entlang der Anschlag (20, 22) mittels eines eigenen Antriebs verfahrbar ist, und daß die Antriebe des Gurtförderers (4) und des Anschlags (20, 22) in gegenseitiger Abhängigkeit steuerbar sind, **dadurch gekennzeichnet, daß** die Steuerung von Gurtförderer (4) und Anschlag (20, 22) derart ausgelegt ist, daß der Anschlag beim Eintreffen des Rundholzes (8) dem Gurtförderer geringfügig nacheilt, daß er das Rundholz während des weiteren Positioniervorganges begleitet und daß beim Eintreffen des Anschlags in der dem Kappmaß entsprechenden Position Gurtförderer und Anschlag gemeinsam stillgesetzt werden.

2. Positioniersystem nach Anspruch 1, **dadurch gekennzeichnet, daß** der Anschlag (20, 22) im Zeitraum zwischen Eintreffen des Rundholzes (8) an ihm und Einleitung des Abbremsvorganges für die Stillsetzung von dem Rundholz geschoben wird.

3. Positioniersystem nach Anspruch 2, **dadurch gekennzeichnet, daß** der Anschlag (20, 22) in dem betreffenden Zeitraum bestrebt ist, dem Gurtförderer (4) nachzueilen.

4. Positioniersystem nach einem der vorhergehenden Ansprüche, **dadurch gekennzeichnet, daß** Anschlag (20, 22) und Gurtförderer (4) bei Annäherung an die dem Kappmaß entsprechende Position gemeinsam, unter Regie seitens des Anschlags, mit vorgegebener Bremsrampenfunktion abgebremst werden.

5. Positioniersystem nach einem der vorhergehenden Ansprüche, **dadurch gekennzeichnet, daß** der Sägevorgang bereits vor Eintreffen des Anschlags (20, 22) in der dem Kappmaß entsprechenden Position eingeleitet wird.

6. Positioniersystem nach einem der vorhergehenden Ansprüche, **dadurch gekennzeichnet, daß** es mindestens zwei voneinander unabhängig verfahrbare und in die Bahn des Rundholzes (8) seitwärts einfahrbare Anschläge (20, 22) der betreffenden Art aufweist, die miteinander abwechselnd zum Einsatz gebracht werden können.

7. Positioniersystem nach Anspruch 6, **dadurch gekennzeichnet, daß** die beiden Anschläge (20, 22) auf verschiedenen Seiten des Gurtförderers (4) geführt sind.

8. Positioniersystem nach einem der vorhergehenden Ansprüche, **dadurch gekennzeichnet, daß** die Antriebe von Gurtförderer (4) und Anschlag bzw. Anschlägen (20, 22) Servoantriebe sind.

9. Positioniersystem nach einem der vorhergehenden Ansprüche, **dadurch gekennzeichnet, daß** der Gurtförderer (4) in seiner Gesamtheit in seiner Längsrichtung verfahrbar gelagert ist.

## Claims

1. Positioning system for roundwood topping installations, which permits roundwood (8) supplied in its longitudinal direction to reach a stop (20,22) movable to and fro in the same direction and which then stops it together with the stop in a predetermined position in relation to a saw blade (14) which can be moved in transversely for the sawing operation, the roundwood (8) being accomodated, downstream of the saw blade (14), on a belt conveyor (4) along which the stop (20, 22) can be moved by a drive of its own, and wherein the drives of the belt conveyor (4) and of the stop (20, 22) can be controlled in a mutually dependent manner, **characterized in that** the control of the belt conveyor (4) and stop (20, 22) is designed in such a way that the stop lags slightly behind the belt conveyor when the roundwood (8) arrives, **in that** the stop accompanies the roundwood during the further positioning operation, and **in that** when the stop arrives in the position corresponding to the topping dimension, the belt conveyor and stop are stopped together.

2. Positioning system according to Claim 1, **characterized in that** in the period between the arrival of the roundwood (8) on the stop (20, 22) and the initiation of the braking operation for bringing it to a standstill, the stop (20, 22) is pushed by the roundwood.

3. Positioning system according to Claim 2, **characterized in that**, in the respective interval, the stop (20, 22) attempts to lag behind the belt conveyor (4).

4. Positioning system according to one of the preceding claims, **characterized in that** the stop (20, 22) and belt conveyor (4), when they approach the position corresponding to the topping dimension, are braked together, under control of the stop, with a predefined braking ramp function.

5. Positioning system according to one of the preceding claims, **characterized in that** the sawing operation is initiated already before the stop (20, 22) has arrived in the position corresponding to the topping dimension.

6. Positioning system according to one of the preceding claims, **characterized in that** it has at least two stops (20, 22) of the relevant type which can be moved independently of one another and moved sideways into the path of the roundwood (8) and can be brought into use alternately with one another.

7. Positioning system according to Claim 6, **characterized in that** the two stops (20, 22) are guided on different sides of the belt conveyor (4).

8. Positioning system according to one of the preceding claims, **characterized in that** the drives of the belt conveyor (4) and stop or stops (20, 22) are servo drives.

9. Positioning system according to one of the preceding claims, **characterized in that** the belt conveyor (4) is mounted such that it can be moved in its entirety in its longitudinal direction.

## Revendications

1. Système de positionnement pour scies à couper de la grume, qui fait parvenir la grume (8) amenée dans son sens longitudinal à une butée (20, 22) pouvant se déplacer en va-et-vient dans le même sens et l'arrête avec celle-ci, pour le sciage, dans une position prévue par rapport à une lame de scie (14) mobile dans le sens transversal, la grume (8) reposant derrière la lame de scie (14) sur un transporteur à bande (4) le long duquel la butée (20, 22) peut se déplacer au moyen d'un entraînement propre et les entraînements du transporteur à bande (4) et de la butée (20, 22) pouvant être commandés de manière dépendante l'une de l'autre, **caractérisé en ce que** la commande du transporteur à bande (4) et de la butée (20, 22) est conçue de telle sorte que la butée suit le transporteur à bande avec un léger retard à l'arrivée de la grume (8), qu'elle accompagne la grume pendant la suite du processus de positionnement et que transporteur à bande et butée sont arrêtés ensemble à l'arrivée de la butée dans la position correspondant à la dimension de sciage.

2. Système de positionnement selon la revendication 1, **caractérisé en ce que** la butée (20, 22) est poussée par la grume pendant le temps entre l'arrivée de la grume (8) à elle et le début du processus de freinage pour l'arrêt.

3. Système de positionnement selon la revendication 2, **caractérisé en ce que** la butée (20, 22) pendant le temps respectif a tendance à suivre le transporteur à bande (4) avec un retard.

4. Système de positionnement selon l'une des revendications précédentes, **caractérisé en ce que** butée (20, 22) et transporteur à bande (4) sont freinés ensemble en approchant de la position correspondant à la dimension de sciage, sous l'action de la butée avec une fonction à rampe de freinage prédéterminée.

5. Système de positionnement selon l'une des revendications précédentes, **caractérisé en ce que** le processus de sciage est déjà introduit avant l'arrivée de la butée (20, 22) dans la position correspondant à la dimension de sciage.

6. Système de positionnement selon l'une des revendications précédentes, **caractérisé en ce qu'**il présente au moins deux butées (20, 22) pouvant se déplacer indépendamment l'une de l'autre, s'engageant latéralement sur la voie de la grume (8), de telle manière qu'elles peuvent être utilisées alternativement.

7. Système de positionnement selon la revendication 6, **caractérisé en ce que** les deux butées (20, 22) sont guidées sur des côtés différents du transporteurs à bande (4),

8. Système de positionnement selon l'une des revendications précédentes, **caractérisé en ce que** les entraînements du transporteur à bande (4) et de la butée ou des butées (20, 22) sont des servocommandes.

9. Système de positionnement selon l'une des revendications précédentes, **caractérisé en ce que** le transporteur à bande (4) dans son ensemble est monté de manière à pouvoir se déplacer dans sa direction longitudinale.
